# EUROPÄISCHE PATENTANMELDUNG

(11) **EP 1 321 397 A1**
(43) Veröffentlichungstag der Anmeldung: **25.06.2003**
(21) Anmeldenummer: 02026137.6
(22) Anmeldetag: 23.11.2002
(51) Int. Cl.: B65G 59/02, B65G 59/04, B65G 61/00

(54) **Verfahren und Vorrichtung zum Entpalettieren von Zuschnittstapeln**

(30) Priorität: 18.12.2001 DE 10162101
(71) Anmelder: TOPACK Verpackungstechnik GmbH, 21493 Schwarzenbek (DE)
(72) Erfinder: Mikulic, Josip, 20535 Hamburg (DE); Vogel, Erich, 21039 Escheburg (DE)
(74) Vertreter: Seemann, Ralph, Dr. Dipl.-Phys.

(57) **Zusammenfassung**

Die Erfindung betrifft eine Vorrichtung und ein Verfahren zum Entpalettieren von unter Einfügung von flachen Zwischenlagen (3) auf Paletten (1) gestapelten Zuschnittstapeln (2) mit wenigstens einem verfahrbaren Greifkopf (4) und wenigstens einen am Greifkopf (4) angeordneten, etwa waagerecht ausgerichteten Einstechwerkzeug (5), welches durch Verfahren des Greifkopfs (4) vor wenigstens einem Zuschnittstapel (2) positionierbar und zum Aufnehmen des Zuschnittstapels (2) mit einer etwa horizontalen Bewegung zwischen Zuschnittstapel (2) und Zwischenlage (3) einführbar ist, und daß durch Verfahren des Greifkopfes (4) den aufgenommenen Zuschnittstapel (2) von der Zwischenlage (3) abnimmt. Die Erfindung ist dadurch gekennzeichnet, daß wenigstens ein Hubmittel (10) zum Anheben wenigstens einer Seite (11) des Zuschnittstapels (2) vorgesehen ist.

Darüber hinaus betrifft die Erfindung die Verwendung eines Hubmittels (10) bei einer Vorrichtung zum Entpalettieren.

## Beschreibung

Die Erfindung betrifft eine Vorrichtung zum Entpalettieren von unter Einfügung von flachen Zwischenlagen auf Paletten gestapelten Zuschnittsstapeln mit wenigstens einem verfahrbaren Greifkopf und wenigstens einen am Greifkopf angeordneten, etwa waagerecht ausgerichteten Einstechwerkzeug, welches durch Verfahren des Greifkopfs vor wenigstens einen Zuschnittstapel positionierbar und zum Aufnehmen des Zuschnittstapels mit einer etwa horizontalen Bewegung zwischen Zuschnittstapel und Zwischenlage einführbar ist und das durch Verfahren des Greifkopfs den aufgenommenen Zuschnittstapel von der Zwischenlage abnimmt. Ferner betrifft die Erfindung ein Verfahren zum Entpalettieren von unter Einfügung von flachen Zwischenlagen auf Paletten gestapelten Zuschnittstapeln, bei dem wenigstens ein an wenigstens einem verfahrbaren Greifkopf angebrachtes, etwa waagerecht ausgerichtetes Einstechwerkzeug vor wenigstens einem Zuschnittstapel positioniert und etwa horizontal unter den Zuschnittstapel geschoben wird, und bei dem durch Verfahren des Greifkopfes der Zuschnittstapel von der Zwischenlage abgenommen wird. Weiterhin betrifft die Erfindung die Verwendung eines Anhebemittels bei einer genannten Vorrichtung zum Entpalettieren.

Verpackungsmaschinen hoher Leistungsfähigkeit verarbeiten große Mengen von Papier- oder Kartonzuschnitten. Um die lückenlose Beschickung dieser Maschinen mit Packmaterialzuschnitten zu gewährleisten, werden die Packmaterialzuschnitte auf Paletten bereitgestellt. Auf den Paletten sind die Packmaterialzuschnitte stapelweise angeordnet, wobei die Zuschnittstapel Schichten bilden, zwischen denen jeweils eine Zwischenlage aus Pappe oder dgl. liegt.

Zum Abnehmen eines Zuschnittstapels von einer solchen Palette wird ein an einem Greifkopf angebrachtes Einstechwerkzeug zwischen der Unterseite des betreffenden Zuschnittstapels und der darunter liegenden Zwischenlage eingeführt und dann durch Verfahren des Greifkopfes der Zuschnittstapel abgehoben und an ein Fördersystem übergeben, das ihn zur betreffenden Packmaschine transportiert. Zur Einführung des Einstechwerkzeugs zwischen dem abzunehmenden Zuschnittstapel und der Zwischenlage wird das Einstechwerkzeug durch die Bewegungsführung des Greifkopfes entlang dreier Achsen entsprechend vor dem Zuschnittstapel positioniert. Nach Positionierung wird durch horizontales Verfahren das Einstechwerkzeug zwischen dem Zuschnittstapel und der Zwischenlage eingeführt. Dabei kann es geschehen, daß das Einstechwerkzeug sich nicht glatt zwischen dem Zuschnittstapel und der Zwischenlage bewegt, sondern in die Zwischenlage einsticht. Beim Anheben des Einstechwerkzeugs wird dann die Zwischenlage mitgerissen, so daß die übrigen noch auf der Zwischenlage befindlichen Zuschnittstapel durcheinander geworfen werden und dementsprechend nicht mehr ordnungsgemäß angeordnet sind und abgenommen werden können.

Derartige Vorrichtungen und Verfahren zum Entpalettieren sind durch die Dokumente DE 37 18 601 A1, EP 579 031 B1 und DE 196 53 953 A1 bekannt.

Bei der aus der DE 37 18 601 A1 bekannten Depalettiervorrichtung wird der Zuschnittstapel durch ein an der Oberseite wirkendes Druckstück verformt derart, daß auf der der Einstechzunge zugeordneten Seite unterhalb des Stapels ein Spalt entsteht. In diesen Spalt wird die Einstechzunge eingeführt. Allerdings wird durch das Druckstück der Zuschnittstapel deformiert.

In der EP 579 031 B1 wird vorgeschlagen, einen Stapel seitlich zu fassen und anzuheben, wobei während des Anhebens von der Unterlage nicht erfaßte untere Zuschnitte durch einen Luftstrom angehoben werden, der neben dem Zuschnittstapel von oben her auf die Unterlage gerichtet ist. Nachfolgend wird der Stapel mittels einer sog. Klemmzunge und einer Gegendruckplatte an seiner Unter- und Oberseite gefaßt.

Ferner ist durch DE 196 53 953 A1 bekannt, die Zwischenlage im Bereich des Einwirkens der Einstechzunge mittels Druckstempel derart zu verformen, daß der Stapel auf der der Einstechzunge zugewandten Seite auffächert.

Dieser Niederhalter bewirkt aber auch, daß der darunter angeordnete Zuschnittstapel eingedrückt oder gar beschädigt wird. Darüber hinaus bestehen Probleme beim Erfassen der äußeren Zuschnittstapel auf der Palette, da dort für den Niederhalter kein abstützender Zuschnittstapel vorhanden ist. Das Einstechwerkzeug kann daher sehr leicht in die Zwischenlage und den unteren, äußeren Zuschnittstapel einstechen.

Ausgehend vom Stand der Technik liegt der vorliegenden Erfindung die Aufgabe zugrunde, die Entpalettierung von Zuschnittstapeln von einer Palette zu verbessern, so daß die Gefahr von Beschädigungen der Zwischenlagen und der in den Zuschnittstapeln enthaltenen unteren Zuschnitte herabgesetzt wird.

Die Lösung der Aufgabe besteht bei einer Vorrichtung der eingangs angegebenen Art darin, daß wenigstens ein Hubmittel zum Anheben wenigstens einer Seite des Zuschnittstapels vorgesehen ist. Durch das Anheben des Zuschnittstapels wird zumindest ein keilförmiger Spalt zwischen der Unterseite des Zuschnittstapels und der Zwischenlage ausgebildet, in den das Einstechwerkzeug eingeschoben wird. Das Anheben des Stapels bewirkt, daß keine Kräfte auf den Stapel einwirken und ihn verformen. Auch wird sich die relative Lage von Zuschnitten in den Stapeln nicht ändern. Das Anheben des Stapels erfolgt mit einer vertikalen Bewegungskomponente. Im Rahmen der Erfindung kann nicht nur eine Seite des Stapels, sondern auch der ganze Zuschnittstapel angehoben werden.

Um das Einstechwerkzeug in den Spalt gut einzuführen ist vorgesehen, daß das Hubmittel vor Einfahren des Einstechwerkzeugs betätigbar ist.

Eine vorteilhafte Weiterbildung der Erfindung besteht darin, daß das Hubmittel vertikal, insbesondere pneumatisch, bewegbar ist. Für die Bewegungsführung des Anhebemittels kann bspw. ein Druckzylinder vorgesehen sein. Damit können auf zuverlässige Weise exakte Bewegungen ausgeführt werden.

Um vorbestimmte Bewegungen des Greifkopfes bzw. des Hubmittels ausführen zu können, ist es vorteilhaft, wenn eine Steuer- und/oder Regeleinheit für das Hubmittel vorgesehen ist.

Vorteilhafterweise ist das Hubmittel°derart am Greifkopf ausgebildet, daß die dem Einstechwerkzeug zugewandte Seite des Zuschnittstapels anhebbar ist. Hierdurch läßt sich zwischen dem Zuschnittstapel und der Zwischenlage eine spaltförmige Öffnung ausbilden, die groß genug ist, um das Einstechwerkzeug einzuführen. Hierbei wird das Einstechwerkzeug so geführt, daß es die Zwischenlage nicht berührt oder gar beschädigt. Dementsprechend werden auch unter der Zwischenlage angeordnete Zuschnittstapel ebenfalls nicht beschädigt.

In einer bevorzugten Ausführungsform der Erfindung weist das Hubmittel wenigstens ein Saugelement auf. Das Saugelement wird vor dem Anheben in Kontakt mit den aufzunehmenden Zuschnittstapeln gebracht. Anschließend wird ein Unterdruck an das Saugelement angelegt, so daß der Zuschnittstapel beim Anliften des Saugelements von diesem festgehalten wird.

Um Beschädigungen am Zuschnittstapel zu verhindern, ist es von Vorteil, wenn das Saugelement als elastischer und/oder flexibler Saugnapf ausgebildet ist. Überdies kann sich das Saugelement dadurch leicht an die Oberfläche des Zuschnittstapels anschmiegen.

In einer bevorzugten Weiterbildung der Erfindung ist wenigstens eine Klemmeinrichtung für den Zuschnittstapel vorgesehen. Die Klemmeinrichtung kann nach Aufnahme eines Stapels sowohl beim Anheben des Zuschnittstapels als auch beim Verfahren des Greifkopfes eingesetzt werden.

Ferner wird die Aufgabe der Erfindung gelöst durch ein Verfahren der eingangs beschriebenen Art, das dadurch weitergebildet ist, daß vor Einschieben des Einstechwerkzeugs wenigstens eine Seite des Zuschnittstapels angehoben wird. Beim Anheben bleibt der Zuschnittstapel in sich unverändert und unverformt. Durch das verwendete Hubmittel werden die äußeren Lagen des Stapels nicht verformt oder verändert. Das Anheben des Stapels bzw. nur einer Seite des Stapels führt dazu, daß das Einstechwerkzeug unter die Unterseite des aufzunehmenden Stapels gelangen kann, ohne die Zwischenlage oder weitere Stapel zu berühren oder zu beschädigen.

Wenn das Einstechwerkzeug unterhalb der Unterseite des angehobenen Stapels eingefahren ist, ist es von Vorteil, wenn nach Einschieben des Einstechwerkzeugs der Zuschnittstapel abgesenkt wird.

Um eine schonende und einfache Behandlung der Zuschnittstapel zu erreichen, ist es vorteilhaft, wenn die dem Einstechwerkzeug zugewandte Seite des Zuschnittstapels angehoben wird. Dadurch bildet sich eine keilförmige Öffnung zwischen der Unterseite des Stapels und der Zwischenlage aus, die ausreichend Platz bietet, den Greifer einzuführen.

Besonders schonend werden die Stapel behandelt, wenn vorgesehen ist, daß der Zuschnittstapel mittels wenigstens eines Saugelements angehoben und/oder abgesenkt wird.

In einer Weiterbildung der Erfindung ist es vorteilhaft, wenn das Saugelement mit Vakuum und/oder Unterdruck beaufschlagt wird. Durch das Anlegen eines Unterdrucks am Saugelement, wenn dieses in Kontakt mit dem aufzunehmenden Stapel gebracht ist, haftet der Stapel gut am Saugelement. Beispielsweise sind Saugnäpfe hierfür gut geeignet, um schnell und leicht eine Haftung zwischen dem Stapel und dem Saugnapf zu ermöglichen. Darüber hinaus läßt sich die Haftung wieder schnell lösen, ohne Beschädigungen oder Verformungen am Stapel zu bewirken.

Gemäß einer vorteilhaften Weiterführung der Erfindung wird nach Einschieben des Einstechwerkzeugs das Saugelement deaktiviert. Dadurch wird die Haftung zwischen dem Stapel und dem Saugelement schnell gelöst.

Außerdem ist es von Vorteil, wenn der Zuschnittstapel nach Einschieben des Einstechwerkzeugs geklemmt wird. Dadurch wird der Stapel fest am Greifkopf gehalten, so daß der Greifkopf den Zuschnittstapel an eine verarbeitende Maschine bspw. eine Zigarettenpackmaschine für das Herstellen von Zigarettenverpackungen übergeben kann.

Als weitere Lösung der Aufgabe wird die Verwendung eines Hubmittels bei einer oben beschriebenen Vorrichtung vorgeschlagen, wobei das Hubmittel zum Anheben wenigstens einer Seite des Zuschnittstapels ausgebildet ist. Die vorteilhaften Wirkungen des Hubmittels ergeben sich aus den vorstehenden Ausführungen.

Nachfolgend wird die Erfindung anhand eines Ausführungsbeispiels ohne Beschränkung des allgemeinen Erfindungsgedankens exemplarisch beschrieben. Es zeigen:
- Fig. 1: eine perspektivische Ansicht einer mit Zuschnittstapeln beladenen Palette;
- Fig. 2a bis 2c: eine Seitenansicht eines Ausführungsbeispiels der Vorrichtung in verschiedenen Positionen des erfindungsgemäß vorgeschlagenen Verfahrens.

Nachfolgend sind in den Zeichnungen gleiche oder entsprechende Teile mit denselben Bezugszeichen versehen, so daß von einer erneuten Vorstellung entsprechend abgesehen wird.

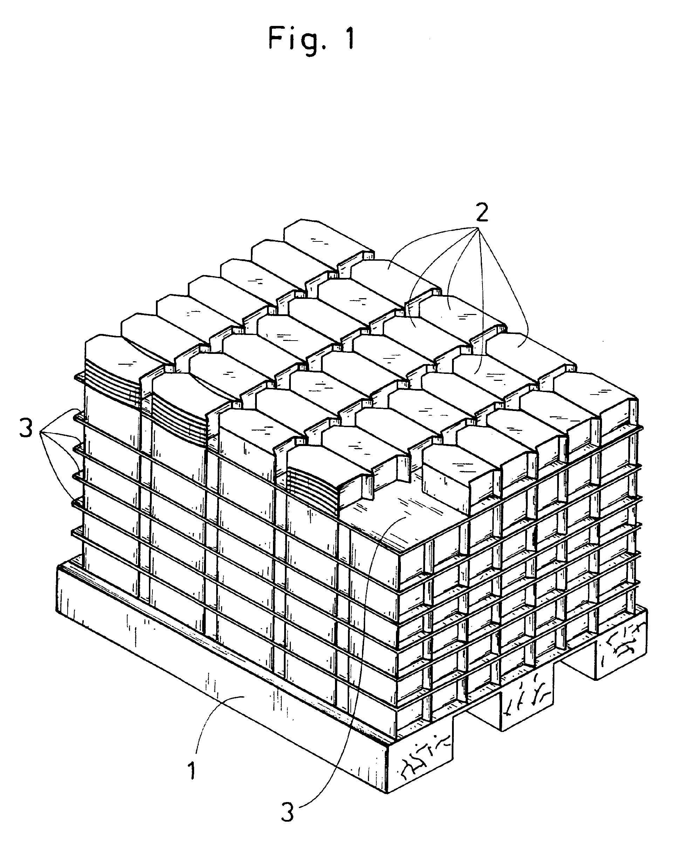

In Fig. 1 ist eine Palette 1 dargestellt, auf welcher ein Vorrat von Zuschnittstapeln 2 aufgeschichtet ist. Zwischen den verschiedenen Schichten von Zuschnittstapeln 2 sind Zwischenlagen 3 angeordnet, die die Stapelkonfiguration auf der Palette 1 stabilisieren.

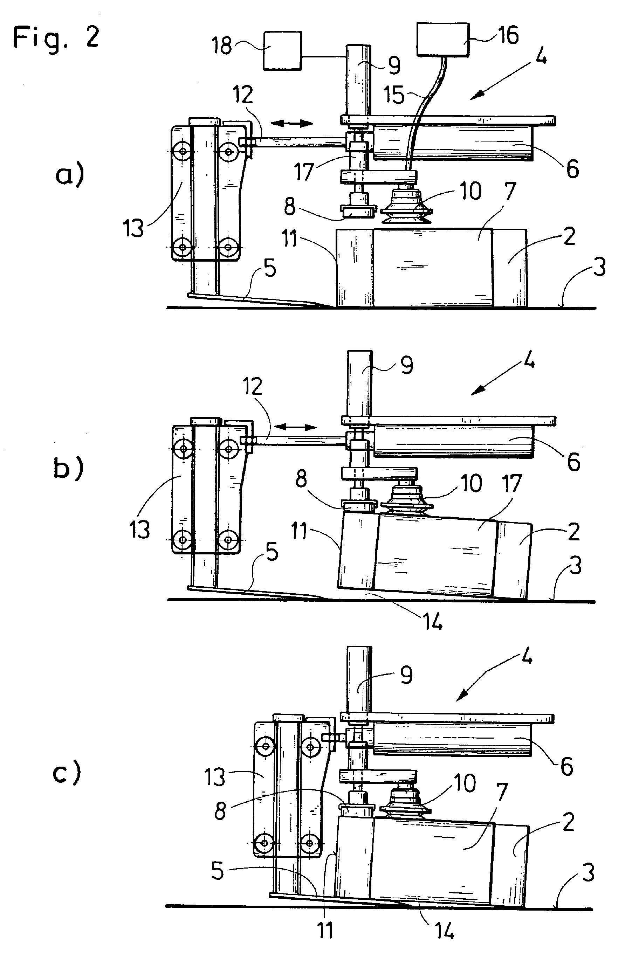

In den Figuren 2a bis 2c sind jeweils unterschiedliche Arbeitspositionen eines Greifkopfs 4 einer Entpalettiervorrichtung, wie sie z.B. in Fig. 2 und 3 von DE 196 53 953 A1 gezeigt ist, dargestellt. Der Greifkopf 4 weist eine horizontal als Druckzylinder ausgebildete Führungseinrichtung 6 mit einer horizontal bewegbaren Führungsstange 12 auf, an deren freiem Ende ein vertikales Führungselement 13 angebracht ist. Am unteren Ende des Führungselementes 13 ist ein Einstechwerkzeug 5 angeordnet, das an seiner Vorderseite eine (scharfe) Einstechkante aufweist. Das Einstechwerkzeug 5 ist als eine flache Zunge ausgebildet und verläuft leicht geneigt zur Horizontalen nach unten, so daß seine Einstechkante durch Herunterfahren des Greifkopfes 4 oder des Führungselementes 13 vertikal verfahrbar geführt und angetrieben ist.

Die Führungseinrichtung 6 und die Führungsstange 12 können als pneumatische oder hydraulische Kolben-Zylindereinheit ausgebildet sein. Zur genauen Positionierung kann die Führungsstange 13 aber auch in der Führungseinrichtung 12 elektromotorisch angetrieben sein.

Der Greifkopf 4 wird zur Entpalettierung vor einen Zuschnittstapel 2 mit einer vorbestimmten Anzahl an Blanketts positioniert. Der Zuschnittstapel 2 wird in der Mitte durch eine Banderole 7 zusammengehalten. Die Banderole 7 dient außerdem als Schutz gegen Verschmutzungen. Insgesamt ist der Zuschnittstapel 2 paketförmig ausgebildet.

Das Einstechwerkzeug 5 ist einer Seite 11 des auf der Zwischenlage 3 liegenden Zuschnittstapels 2 gegenüber positioniert.

Der Greifkopf 4 verfügt über einen Niederhalter 8, der bei Positionierung des Greifkopfs 4 vor dem Zuschnittstapel 2 im Bereich der dem Einstechwerkzeug 5 zugeordneten Seite 11 angeordnet ist. Der Niederhalter 8 ist über eine Führungsstange 17 und mittels eines Druckzylinders 9 vertikal bewegbar. Der Druckzylinder 9 ist mit einer Steuereinheit 18 oder alternativ mit einer Regeleinheit verbunden, so daß die Führungsstange 17 durch den Druckzylinder 9 exakt bewegt werden kann.

An der Führungsstange 17 des Niederhalters 8 ist neben dem Niederhalter 8 auch ein Saugnapf 10 befestigt und vertikal geführt. Der Saugnapf 10 ist elastisch und flexibel ausgebildet und besteht beispielsweise aus Gummi oder einem gummiähnlichen Material. Er ist über eine Unterdruckleitung 15 mit einer Unterdruckquelle 16 verbunden und mit Unterdruck beaufschlagbar.

In Fig. 2a ist die Ausgangssituation vor Entnahme des Stapels 2 von der Zwischenlage 3 dargestellt. Nach Positionierung des Greifkopfes 4 vor dem Stapel 2 wird der pneumatische Niederhalter 8 abgesenkt. Gleichzeitig wird mit dem Niederhalter 8 der Saugnapf 10 abgesenkt. Bevor der Niederhalter 8 die Oberfläche des Stapels 2 berührt, setzt die offene Unterseite des Saugnapfs 10 auf der Banderole 7 des Stapels 2 auf. In dieser Position wird die vertikale Abwärtsbewegung des Niederhalters 8 und des Saugnapfs 10 angehalten. Danach wird ein Unterdruck an den Saugnapf 10 angelegt, so daß nachfolgend der Stapel 2 an der Banderole 7 erfaßt wird (Fig. 2b).

Durch Aufwärtsbewegung des Saugnapfs 10 mittels des Druckzylinders 9 wird der Stapel 2 einseitig vertikal nach oben angehoben, so daß sich zwischen der Unterseite des Stapels 2 und der Zwischenlage 3 ein Spalt 14 ausbildet. Durch das einseitige Anheben des Stapels 2 ist der Spalt 14 keilförmig ausgeformt. Die Höhe des Spaltes 14 ist so groß, daß das Einstechwerkzeug 5 in den Spalt 14 eingeschoben werden kann.

Selbstverständlich ist es mit einem anders angeordneten Saugelement möglich, den Zuschnittstapel 2 komplett hochzuheben, z.B. wenn das Saugelement in der Nähe oder über dem Schwerpunkt des Stapels 2 angeordnet ist.

Nachdem das Einstechwerkzeug 5 in den Spalt 14 eingeschoben ist (Fig. 2c), werden der Niederhalter 8 und der Saugnapf 10 weiter abgesenkt. Sobald das Einstechwerkzeug 5 ganz in den Spalt 14 eingeschoben ist, wird der Unterdruck im Saugnapf 10 abgeschaltet. Danach kann der Niederhalter 8 wieder hochgefahren werden. Der auf dem Einstechwerkzeug 5 plazierte Stapel 2 kann mittels des Greifkopfes 4 zu einer Weiterverarbeitungsmaschine, bspw. einer Zigarettenpackmaschine für das Herstellen von Zigarettenverpackungen transportiert und übergeben werden.

Durch den Gegenstand der Erfindung wird verhindert, daß das Einstechwerkzeug des Greifkopfes 4 die Zwischenlage 3 oder weitere darunter liegende Stapel beschädigt. Insbesondere findet die Erfindung bevorzugt Anwendung bei banderolierten Stapeln 2, die extrem steif sind. Bei der Erfindung wird insbesondere ausgenutzt, daß die banderolierten Blankettstapel 2 nicht verformbar sind. Durch die Nachrüstung eines Greifkopfes 4 mit einem Hubmittel 10, insbesondere Saugnapf, können bereits bestehende Greifköpfe leicht nachgerüstet werden.

### Bezuqszeichenliste:

- 1: Palette
- 2: Zuschnittstapel
- 3: Zwischenlage
- 4: Greifkopf
- 5: Einstechwerkzeug
- 6: Druckzylinder
- 7: Banderole
- 8: Niederhalter
- 9: Druckzylinder
- 10: Saugnapf
- 11: Vorderseite
- 12: Führungsstange
- 13: vertikales Führungselement
- 14: Spalt
- 15: Unterdruckleitung
- 16: Unterdruckquelle
- 17: Führungsstange
- 18: Steuereinheit

## Patentansprüche

1. Vorrichtung zum Entpalettieren von unter Einfügung von flachen Zwischenlagen (3) auf Paletten (1) gestapelten Zuschnittstapeln (2) mit wenigstens einem verfahrbaren Greifkopf (4) und wenigstens einem am Greifkopf (4) angeordneten, etwa waagerecht ausgerichteten Einstechwerkzeug (5), welches durch Verfahren des Greifkopfs (4) vor wenigstens einem Zuschnittstapel (2) positionierbar und zum Aufnehmen des Zuschnittstapels (2) mit einer etwa horizontalen Bewegung zwischen Zuschnittstäpel (2) und Zwischenlage (3) einführbar ist und das durch Verfahren des Greifkopfs (4) den aufgenommenen Zuschnittstapel (2) von der Zwischenlage (3) abnimmt, **dadurch gekennzeichnet, daß** wenigstens ein Hubmittel (10) zum Anheben wenigstens einer Seite (11) des Zuschnittstapels (2) vorgesehen ist.

2. Vorrichtung nach Anspruch 1, **dadurch gekennzeichnet, daß** das Hubmittel (10) vor Einfahren des Einstechwerkzeugs (5) betätigbar ist.

3. Vorrichtung nach Anspruch 1 oder 2, **dadurch gekennzeichnet, daß** das Hubmittel (10) vertikal, insbesondere pneumatisch, bewegbar ist.

4. Vorrichtung nach einem oder mehreren der Ansprüche 1 bis 3, **dadurch gekennzeichnet, daß** eine Steuer- und/oder Regeleinheit (18) für das Hubmittel (10) vorgesehen ist.

5. Vorrichtung nach einem oder mehreren der Ansprüche 1 bis 4, **dadurch gekennzeichnet, daß** das Hubmittel (10) am Greifkopf (4) derart ausgebildet ist, daß die dem Einstechwerkzeug (5) zugewandte Seite (11) des Zuschnittstapels (2) anhebbar ist.

6. Vorrichtung nach einem oder mehreren der Ansprüche 1 bis 5, **dadurch gekennzeichnet, daß** das Hubmittel (10) mittels wenigstens ein Saugelement (10) aufweist.

7. Vorrichtung nach Anspruch 6, **dadurch gekennzeichnet, daß** das Saugelement (10) als elastischer und/oder flexibler Saugnapf ausgebildet ist.

8. Vorrichtung nach einem oder mehreren der Ansprüche 1 bis 7, **dadurch gekennzeichnet, daß** wenigstens eine Klemmeinrichtung (8) für den Zuschnittstapel (2) vorgesehen ist.

9. Verfahren zum Entpalettieren von unter Einfügung von flachen Zwischenlagen (3) auf Paletten (1) gestapelten Zuschnittstapeln (2), bei dem wenigstens ein an wenigstens einem verfahrbaren Greifkopf (4) angebrachtes, etwa waagerecht ausgerichtetes Einstechwerkzeug (5) vor wenigstens einem Zuschnittstapel (2) positioniert und etwa horizontal unter dem Zuschnittstapel (2) geschoben wird und bei dem durch ein Verfahren des Greifkopfs (4) der Zuschnittstapel (2) von der Zwischenlage (3) abgenommen wird, **dadurch gekennzeichnet, daß** vor Einschieben des Einstechwerkzeugs (5) wenigstens eine Seite (11) des Zuschnittstapels (2) angehoben wird.

10. Verfahren nach Anspruch 9, **dadurch gekennzeichnet, daß** nach Einschieben des Einstechwerkzeugs (5) der Zuschnittstapel (2) abgesenkt wird.

11. Verfahren nach Anspruch 9 oder 10, **dadurch gekennzeichnet, daß** die dem Einstechwerkzeug (5) zugewandte Seite (11) des Zuschnittstapels (2) angehoben wird.

12. Verfahren nach einem der Ansprüche 9 bis 11, **dadurch gekennzeichnet, daß** der Zuschnittstapel (2) mittels wenigstens eines Saugelements (10) angehoben und/oder abgesenkt wird.

13. Verfahren nach Anspruch 12, **dadurch gekennzeichnet, daß** das Saugelement (10) mit Vakuum und/oder Unterdruck beaufschlagt wird.

14. Verfahren nach Anspruch 12 oder 13, **dadurch gekennzeichnet, daß** nach Einschieben des Einstechwerkzeugs (5) das Saugelement (10) deaktiviert wird.

15. Verfahren nach einem oder mehreren der Ansprüche 9 bis 14, **dadurch gekennzeichnet, daß** der Zuschnittstapel (2) nach Einschieben des Einstechwerkzeugs (5) geklemmt wird.

16. Verwendung eines Hubmittels (10) bei einer Vorrichtung zum Entpalettieren von unter Einfügung von flachen Zwischenlagen (3) auf Paletten (1) gestapelten Zuschnittstapeln (2) mit wenigstens einem verfahrbaren Greifkopf (4) und wenigstens einem am Greifkopf (4) angeordneten, etwa waagerecht ausgerichteten Einstechwerkzeug (5), welches durch Verfahren des Greifkopfs (4) vor wenigstens einem Zuschnittstapel (2) positionierbar und zum Aufnehmen des Zuschnittstapels (2) mit einer etwa horizontalen Bewegung zwischen Zuschnittstapel (2) und Zwischenlage (3) einführbar ist, und daß durch Verfahren des Greifkopfs (4) den aufgenommenen Zuschnittstapel (2) von der Zwischenlage (3) abnimmt, **dadurch gekennzeichnet, daß** das Hubmittel (10) zum Anheben wenigstens einer Seite (11) des Zuschnittstapels (2) vorgesehen ist.

17. Verwendung eines Hubmittels (10) nach Anspruch 16, **dadurch gekennzeichnet, daß** das Hubmittel (10) vor Einfahren des Einstechwerkzeugs (5) betätigbar ist.

18. Verwendung eines Hubmittels (10) nach Anspruch 16 oder 17, **dadurch gekennzeichnet, daß** das Hubmittel (10) vertikal, insbesondere pneumatisch, bewegbar ist.

19. Verwendung eines Hubmittels (10) nach einem oder mehreren der Ansprüche 16 bis 18, **dadurch gekennzeichnet, daß** eine Steuer- und/oder Regeleinheit (18) für das Hubmittel (10) vorgesehen ist.

20. Verwendung eines Hubmittels (10) nach einem oder mehreren der Ansprüche 16 bis 19, **dadurch gekennzeichnet, daß** das Hubmittel (10) am Greifkopf derart ausgebildet ist, daß die dem Einstechwerkzeug (5) zugewandte Seite (11) des Zuschnittstapels (2) anhebbar ist.

21. Verwendung eines Hubmittels (10) nach einem oder mehreren der Ansprüche 16 bis 20, **dadurch gekennzeichnet, daß** das Hubmittel (10) mittels wenigstens eines Saugelements (10) ausgebildet ist.

22. Verwendung eines Hubmittels (10) nach Anspruch 21, **dadurch gekennzeichnet, daß** das Saugelement (10) als elastischer und/oder flexibler Saugnapf ausgebildet ist.

23. Verwendung eines Hubmittels (10) nach einem oder mehreren der Ansprüche 16 bis 22, **dadurch gekennzeichnet, daß** wenigstens eine Klemmeinrichtung (8) für den Zuschnittstapel (2) vorgesehen ist.
